# EUROPÄISCHE PATENTANMELDUNG

(11) **EP 1 248 080 A1**
(43) Veröffentlichungstag der Anmeldung: **09.10.2002**
(21) Anmeldenummer: 02006431.7
(22) Anmeldetag: 22.03.2002
(51) Int. Cl.: G01F 1/075, G01F 15/00, G01F 15/06

(54) **Strömungsmessgerät mit Magnetkupplung**

(30) Priorität: 04.04.2001 EP 01810339
(71) Anmelder: GWF Gas- & Wassermesserfabrik AG, CH-6002 Luzern (CH)
(72) Erfinder: Schuhmacher, Beat, Masch. Ing. HTL, 4800 Zofingen (CH); Mettler, Roland, Dipl. Phys. ETH, 6010 Kriens (CH)
(74) Vertreter: Blöchle, Hans

(57) **Zusammenfassung**

Bei diesem Messgerät für ein strömendes Medium ist eine Magnetkupplung vorgesehen, bei welcher ein primäres Element (2.1) mittels eines als Flügelrad ausgebildetes Messelement (2) angetrieben wird. Das Messelement (2) wird von einem eine Messkammer (1) durchströmenden Medium (1.1) angetrieben. Das primäre Element (2.1) weist einen vierpolig magnetisierten Ringmagnet (6) auf. Die Rotation wird vom primären Element (2.1) berührungslos mittels Magnetkraft auf ein sekundäres Element (4) übertragen, wobei die Magnetkraft vom Ringmagnet (6) des primären Elementes (2.1) und von einem Magnet (7) des sekundären Elementes (4) erzeugt wird. Die Synchronisation bei rotierendem Element (2.1) mit dem sekundären Element (4) ist gegeben, wenn die Pole des vierpoligen Magneten (6) diejenigen der zwei Magnete (7) anziehen und sich somit gegenseitig nicht mehr verdrehen. Das angetriebene sekundäre Element (4) überträgt die Bewegung auf ein Zählwerk (5) mittels Trieb (10).

## Beschreibung

Die Erfindung betrifft ein Messgerät für ein strömendes Medium bestehend aus einer vom Medium durchströmten Messkammer, in der ein vom Medium in Drehbewegung versetztes mit einem primären Element in Verbindung stehendes Messelement angeordnet ist, wobei die Drehbewegung des primären Elementes berührungslos auf ein sekundäres Element übertragbar ist, das mit einem Zählwerk in Verbindung steht.

In Messgeräten für ein strömendes Medium wie beispielsweise Wasser, Gas, Öl, usw. wird in einer Messkammer ein Messelement mit einem primären Element durch das Medium in eine Drehbewegung versetzt. Diese Drehbewegung wird auf ein ausserhalb des Mediums befindliches sekundäres Element übertragen. Primäres Element und sekundäres Element bilden eine Magnetkupplung bzw. eine Synchronkupplung. Das Medium ist dabei durch eine aus einem nichtmagnetischen Material gefertigte Trennwand vom Zählwerk getrennt. Das sekundäre Element dreht sich koaxial zum primären Element und leitet die Drehbewegung beispielsweise auf ein mechanisches Zählwerk weiter. Ausser einem oder mehrerer Permanentmagneten kann die Synchronkupplung auch noch ferromagnetische Materialien umfassen.

Aus US 4023410 ist ein Wasserzähler bekannt, bei welchem das primäre Element als treibendes Element und das sekundäre Element als getriebenes Element parallel zur Drehachse je zwei Magnete mit bevorzugter Magnetisierungsrichtung parallel zur Drehachse so angeordnet haben, dass die beiden Elemente sich im Ruhezustand magnetisch anziehen. Die gleiche Funktion lässt sich bekannterweise auch mit je einem entsprechend magnetisierten Ringmagneten erreichen. Wie aus EP 0 882 953 bekannt, können je beide Ringmagnete beispielsweise aus Hartferrit mit verschiedenen geradzahligen Polzahlen, beispielsweise zweipolig oder vierpolig ausgeführt sein.

Aus DE 1423884 und WO 9711338 ist eine Synchronkupplung bekannt, in welcher die Permanentmagnete mit einer Magnetisierungsrichtung parallel zur Drehachse auf dem primären und dem sekundären Element so angeordnet sind, dass sich die beiden Elemente magnetisch abstossen.

Aus DE 2354114 ist eine Synchronkupplung bekannt, bei welcher die Permanentmagnete mit der Hauptmagnetisierungsrichtung senkrecht zur Drehachse angeordnet sind. Im Unterschied zu den obigen Anordnungen mit axialer Magnetisierungsrichtung, bei der die Magnetkupplung eine Kraft auf die axialen Lager des primären und des sekundären Elementes ausüben, wird bei dieser Anordnung eine Kraft auf die radialen Lager des primären und des sekundären Elementes erzeugt, falls die Anordnung nicht absolut rotationssymmetrisch ist, was in der Praxis kaum erreichbar ist.

Alle obigen Anordnungen haben die Eigenschaft, dass die rotierenden Elemente durch ein externes Magnetfeld beeinflusst werden können, falls dieses externe Magnetfeld, welches beispielsweise durch einen externen Hufeisenmagneten erzeugt werden kann, innerhalb des in sich geschlossenen Magnetfeldes der Magnetkupplung nicht konstant ist. Diese Beeinflussung ist an sich unerwünscht, da sie das Messergebnis verfälschen kann.

Die Beeinflussbarkeit der Magnetkupplung lässt sich berechnen als Raumintegral des Vektorproduktes aus dem Feld der Magnetkupplung und dem Feld des externen Magneten und lässt sich messen durch einen Vergleich der Ergebnisse des Messgerätes mit und ohne externen Magneten. Aus Berechnungen und Messungen der Beeinflussbarkeit durch externe Magnete ist bekannt, dass die verschiedenen obigen Anordnungen von externen Magneten unterschiedlich stark beeinflussbar sind.

Am wenigsten beeinflussbar durch externe Magnete ist die Synchronkupplung mit Magnetisierungsrichtung senkrecht zur Drehachse. Ebenfalls wenig beeinflussbar sind die beiden Ausführungen mit abstossenden Magneten und mit vierpoligen Magneten. Am stärksten beeinflussbar ist die Magnetkupplung mit zweipoligen Magneten mit Magnetisierungsrichtung parallel zur Drehachse.

Eine bekannte Massnahme zur weiteren Reduktion der Beeinflussbarkeit, welche sich direkt aus den Grundsätzen der Elektrodynamik ableiten lässt, ist die Abschirmung der Magnetfelder der externen und der internen Magnete mittels ferromagnetischer Materialien. So sind zum Beispiel aus US 5854429 und aus der oben erwähnten EP 0 882 953 Anwendungen solcher Abschirmungen für Flügelradzähler bekannt. Eine weitere bekannte Massnahme zur Reduktion der Beeinflussbarkeit besteht darin, die Magnete nur einseitig je auf der dem anderen Element zugewandten Seite zu magnetisieren, was beispielsweise bei Ringmagneten problemlos herstellbar ist.

Eine Grundvoraussetzung für ein korrektes Messergebnis in einem Messgerät mit Synchronkupplung ist, dass das primäre Element und das sekundäre Element in jedem Betriebszustand synchron rotieren oder nach transienten Zuständen jedenfalls rasch wieder synchronisieren. Dies ist insbesondere für den Fall nicht selbstverständlich, bei dem das primäre Element rasch beschleunigt, beispielsweise bei einem raschen Anstieg der Geschwindigkeit des zu messenden Mediums. Im Extremfall kann eine rasche Beschleunigung des primären Elementes dazu führen, dass das sekundäre Element stillsteht und dass das durch die Synchronkupplung bei jeder vollen Umdrehung des sich rasch drehenden primären Elementes übertragene Drehmoment Null wird. Durch eine entsprechende Abgleichung von maximaler Drehzahl, Magnetkraft, Masse und Axialspiel des sekundären Elementes ist es möglich, die Synchronisation einer Magnetkupplung mit vertikaler Drehachse sicherzustellen.

Am Beispiel einer zweipoligen Kupplung mit Magnetisierung parallel zur Drehachse soll beschrieben werden, wie diese Synchronisation bekanntermassen erreicht wird. Dieses Beispiel lässt sich analog auf alle obigen Anordnungen mit Magnetisierung parallel zur Drehachse übertragen. Über eine gegenseitige Verdrehung von primärem und sekundärem Element von 360° haben die Tangentialkraft und damit das übertragene Drehmoment im wesentlichen einen sinusförmigen Verlauf. Die Axialkraft hat ebenfalls einen sinusförmigen Verlauf mit einer Verschiebung von 90°. Durch die abstossende Axialkraft wird der Abstand von primärem zu sekundärem Element vergrössert, was die Magnetkräfte reduziert, so dass die negative, entgegen der Drehrichtung gerichtete Hälfte der sinusförmigen Tangentialkraft reduziert wird und über die gesamte Verdrehung von 360° ein resultierendes Drehmoment mit dem richtigen Vorzeichen entsteht. Damit bei einer nachfolgenden Verdrehung von primärem und sekundärem Element wiederum ein resultierendes Drehmoment mit dem richtigen Vorzeichen entsteht, ist es erforderlich, dass durch die anziehende Axialkraft der Abstand von primärem zu sekundärem Element wieder auf den Ausgangswert reduziert wird. Dies wird bei vertikaler Drehachse ohne weitere Mittel dadurch erreicht, dass die auf das sekundäre Element wirkende Gravitationskraft zur Abstandsreduktion beiträgt.

Im Falle einer horizontalen Drehachse muss mit zusätzlichen Mitteln dafür gesorgt werden, dass der Abstand zwischen den beiden Elementen in der anziehenden Hälfte der Verdrehung wieder auf den Ausgangswert reduziert wird. Aus WO 9711338 ist eine Konstruktion mit einer Feder bekannt, welche dieses Problem löst. Nachteilig an dieser Konstruktion mit Feder ist, dass dadurch das Synchronisationsverhalten bei vertikaler Drehachse verschlechtert wird und dass in der Praxis die Herstellung einer solchen Feder mit der erforderlichen Genauigkeit relativ aufwendig ist.

Hier will die Erfindung Abhilfe schaffen. Die Erfindung, wie sie in Anspruch 1 gekennzeichnet ist, löst die Aufgabe, die Nachteile der bekannten Einrichtungen zu vermeiden und ein Messgerät zu schaffen, bei dem Störeinflüsse keine Wirkung auf die Messgenauigkeit haben.

Die durch die Erfindung erreichten Vorteile sind im wesentlichen darin zu sehen, dass die durch die Magnetkräfte erzeugte Lagerreibung möglichst minimal ist und dass bei abrupten Drehzahländerungen die Krafteinwirkung auf das sekundäre Element nicht abreisst und das sekundäre Element rasch mit dem primären Element synchronisiert. Weiter vorteilhaft ist, dass externe Magnete keinen Einfluss haben auf die Genauigkeit des Messgerätes. Ein weiterer Vorteil ist, dass die Masse und damit das Trägheitsmoment des sekundären Elementes reduziert werden kann, wodurch die Lagerbelastung und das zur Übertragung der Drehbewegung erforderliche Drehmoment reduziert werden.

In einer ersten Gestaltungsvariante umfasst die Synchronkupplung ein primäres Element mit einem vierpoligen Magneten mit einer im wesentlichen axialen Magnetisierung und ein sekundäres Element mit zwei im wesentlichen parallel zur Drehachse magnetisierten Magneten. Der vierpolige Magnet auf dem primären Element kann ein vierpolig magnetisierter Ringmagnet sein oder aus vier einzelnen Magneten in einem geeigneten Halter aus paramagnetischem Material, beispielsweise Kunststoff oder Buntmetall gebildet sein. Bei Verwendung eines Ringmagneten kann dieser einseitig auf der dem sekundären Element zugewandten Seite magnetisiert oder axial durchmagnetisiert sein. Wesentlich für die optimale Funktion ist die unten erläuterte magnetische Kraft zwischen dem primären und dem sekundären Element. Das sekundäre Element umfasst in dieser bevorzugten Gestaltungsvariante zwei gegenüberliegend parallel zur Drehachse angeordnete Magnete, welche vorzugsweise eine kubische oder zylindrische Form haben. In kubischer Form brauchen nicht alle Kanten dieselbe Länge aufzuweisen. Vorteilhaft ist beipielsweise eine Form, bei der die tangentiale und die axiale Kante, bezogen auf die Rotationsachse des sekundären Elementes etwa gleich lang sind und die dritte, in etwa radiale Kante kürzer ist, so dass bei der Ansicht aus axialer Richtung das durch den Magneten gebildete Rechteck innerhalb der in dieser Ansicht vom Ringmagneten auf dem primären Element durch zwei Kreise gebildeten Fläche liegt. Die beiden Magnete auf dem sekundären Element sind so angebracht respektive so magnetisiert, dass auf der dem primären Element zugewandten Seite je gleiche Pole (beides Nordpole oder beides Südpole) sind. Im ruhenden Zustand sind das primäre und das sekundäre Element in der gegenseitigen Verdrehung so gestellt, dass sich verschiedene Pole der beiden Elemente gegenüberstehen, so dass sich primäres und sekundäres Element anziehen. Bei synchroner Rotation sind die beiden Elemente abhängig vom übertragenen Drehmoment von obiger Ausgangslage zwischen 0 bis maximal 45° gegeneinander verdreht. Wird die Verdrehung grösser, so ist die Magnetkupplung zu schwach oder zu klein dimensioniert. Betrachten wir nun den Fall, in welchem das primäre Element plötzlich rasch beschleunigt. Da das durch die Magnete übertragene Drehmoment in diesem Fall unter Umständen nicht ausreicht um das sekundäre Element rasch genug zu beschleunigen, wird die relative Verdrehung zwischen den beiden Elementen grösser als 45° und die beiden Pole des sekundären Elementes stehen gleichen Polen des primären Elementes gegenüber. In diesem Zustand stossen sich die beiden Magnete ab und das sekundäre Element bewegt sich innerhalb seines Axialspiels vom primären Element weg. Bei grösserem Abstand zwischen den Magneten reduziert sich die Magnetkraft bzw. die tangentiale und die axiale Kraftkomponente. Um eine optimale Synchronisation zu erreichen, muss die Magnetkraft mindestens so stark sein, dass bei maximaler Drehzahl des primären Elementes und stillstehendem sekundären Element sich das letztere bei vertikaler Drehachse während der Zeit, bei der sich abstossende Pole gegenüberstehen, ausreichend vom primären Element wegbewegt, wobei die Magnetkraft signifikant reduziert wird. Eine Vergrösserung des Magnetabstandes um 10% bis 20% vom Abstand der Magnete in anziehendem Zustand ist in der Regel ausreichend. Diese Forderung heisst, dass die Magnetkraft von der Masse des sekundären Elementes abhängig gewählt werden muss. Das axiale Spiel des sekundären Elementes wird vorzugsweise maximal so gross gewählt, dass bei horizontaler Drehachse, ohne axiale Wirkung der Gravitation, bei maximaler Drehzahl des primären Elementes während dem Zeitabschnitt mit anziehender Magnetkraft das sekundäre Element sich vom oberen axialen Anschlag bis zum unteren axialen Anschlag bewegt. Auf diese Weise ist sichergestellt, dass die Magnetkupplung auch bei der schlechtesten Ausgangslage, bei der das primäre Element sich mit maximaler Drehzahl dreht und das sekundäre Element stillsteht, die beiden Elemente wieder synchronisieren.

In einer zweiten Gestaltungsvariante umfasst die Magnetkupplung auf dem primären Element und auf dem sekundären Element parallel zur Drehachse je zwei Magnete mit bevorzugter Magnetisierungsrichtung parallel zur Drehachse, wobei die Magnete so angeordnet sind, dass die beiden Elemente sich im Ruhezustand magnetisch anziehen. Diese Funktion lässt sich bekannterweise durch zwei axial zur Drehachse magnetisierte Ringmagnete erreichen. Eine wesentlich bessere Synchronisation kann bei dieser Gestaltungsform der Kupplung erreicht werden, falls das sekundäre Element sein Drehmoment dem ersten Trieb des Zählwerkes über eine Schrägverzahnung überträgt. Wie am Anfang erläutert wird durch die abstossende Axialkraft der Abstand von primärem zu sekundärem Element vergrössert, was die Magnetkräfte reduziert, so dass ein resultierendes Drehmoment mit dem richtigen Vorzeichen entsteht. Damit bei einer nachfolgenden Verdrehung von primärem und sekundärem Element wiederum ein resultierendes Drehmoment mit dem richtigen Vorzeichen entsteht, ist es erforderlich, dass durch die anziehende Axialkraft der Abstand von primärem zu sekundärem Element wieder auf den Ausgangswert reduziert wird.

Der Vorteil der Schrägverzahnung gegenüber einer normalerweise verwendeten Geradverzahnung liegt darin, dass bei einer Beschleunigung des sekundären Elements eine axiale Kraftkomponente erzeugt wird, welche den Abstand bei vertikaler und horizontaler Drehachse immer definiert reduziert. Dadurch wird bei jeder Einbaulage gewährleistet, dass ein resultierendes Drehmoment mit richtigen Vorzeichen entsteht. Der Schrägungswinkel muss dabei so gewählt werden, dass die axiale Kraftkomponente in Richtung des primären Elementes zeigt und die axiale Abstossung der Magnete noch zulässt und somit sich das sekundäre Element an den oberen Anschlag bewegen kann. Das Verhältnis von Magnetkraft und Schrägungswinkel ist dann optimal aufeinander abgestimmt, wenn sich die Zeitabschnitte der Bewegung des sekundären Elementes vom unteren an den oberen Anschlag und vom oberen an den unteren Anschlag unterscheiden. Dabei sollte die ganze Bewegung innerhalb einer Polverdrehung ablaufen. Ein weiterer Vorteil der Schrägverzahnung ist ihre geringere Geräuschentwicklung gegenüber der Geradverzahnung, da die Zähne allmählich in Eingriff kommen und entsprechend belastet werden.

In einer dritten Gestaltungsvariante werden die Merkmale obiger Gestaltungsvarianten kombiniert. Dabei muss die Kraft der Magnetkupplung und der Schrägungswinkel der Verzahnung so aufeinander abgestimmt werden, dass eine ausreichende Synchronisation erfolgt.

Um eine optimale Abschirmung der Magnetkupplung von der Beeinflussung durch externe Magnete zu erhalten, können alle Gestaltungsvariante mit einem zusätzlichen Magnetschutz ausgerüstet werden. Den grösst möglichen Schutz vor Beeinflussung durch externen Magnete wird dann erreicht, wenn sich die in sich geschlossenen Magnetfelder der Magnetkupplung und das Magnetfeld des externen Magneten nicht schneiden. Dazu wäre es theoretisch ideal, wenn die Magnetkupplung durch eine zweischalige kugelförmige Abschirmung aus ferromagnetischem Material von der Umgebung getrennt wäre. In der äusseren Schale wäre dann das Magnetfeld der externen Magnete und in der inneren Schale die Rückführung des Magnetfeldes der Kupplungsmagnete. In der Praxis kann eine magnetische Abschirmung mit zwei ferromagnetischen Ringen um die Magnetkupplung erreicht werden. Dabei kann es sich um zwei voneinander getrennte ferromagnetische Ringe oder um zwei horizontal miteinander verbundene ein Stück bildende Ringe handeln. Nur mit beiden Ringen kann erreicht werden das externe Magnete und die Magnetkupplung von einander getrennte geschlossene magnetische Feldlinien besitzen. Die Abschirmungsgüte ist dabei eine Funktion des Abstandes der Ringe, je grösser der Abstand der Ringe ist desto besser ist die Magnetkupplung von externen magnetischen Felder abgeschirmt.

Anhand der beiliegenden Figuren wird die vorliegende Erfindung näher erläutert.

### Es zeigen:

Fig. 1
   ein Messgerät bestehend aus einem Messelement mit primärem Element zur Übertragung einer Drehbewegung auf ein mit einem Zählwerk in Verbindung stehendes sekundäres Element, wobei eine Magnetkupplung mit axial magnetisiertem vierpoligem Ringmagneten auf dem primären Element und mit zwei axial magnetisierten zylindrischen Magneten auf dem sekundären Element vorgesehen ist,

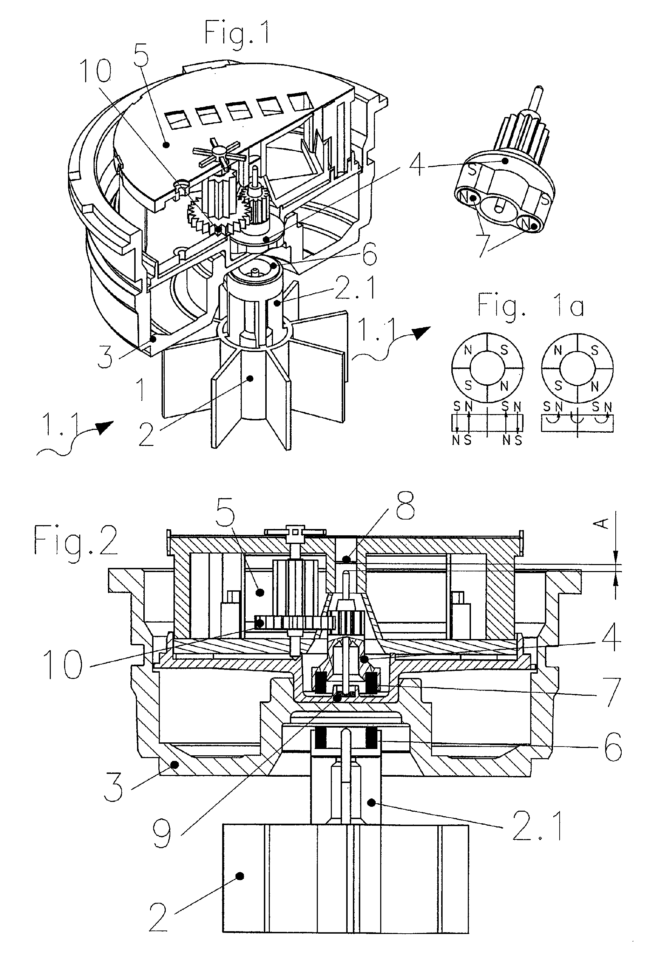

Fig. 1a zeigt zwei Varianten der Magnetisierung für den Ringmagneten,
Fig. 2
   einen Schnitt durch das Messgerät gemäss Fig. 1, wobei sich das sekundäre Element zwischen einem oberen und einem unteren Anschlag innerhalb des Masses A axial frei bewegen kann,
Fig. 3
   eine graphische Darstellung einer axialen Kraft, einer Axialverschiebung, eines übertragenen Drehmomentes und eines resultierenden Drehmomentes einer Magnetkupplung mit Magnetisierung parallel zur Drehachse in Funktion der gegenseitigen Verdrehung von primärem und sekundärem Element,
Fig. 4
   eine aus primärem und sekundärem Element gebildete Magnetkupplung mit am primären und sekundären Element angeordneten vierpolig magnetisierten Magneten und mit einer Schrägverzahnung am sekundären Element,
Fig. 5
   eine aus primärem und sekundärem Element gebildete Magnetkupplung mit am sekundären Element angeordneten axial magnetisierten zweipoligen Magneten und mit einer Schrägverzahnung am sekundären Element,
Fig. 6
   ein Magnetschutz mit zwei unabhängigen um die Magnetkupplung angeordneten ferromagnetischen Ringen,
Fig. 7
   ein einstückiger um die Magnetkupplung angeordneter Magnetschutz und
Fig. 8
   die Wirkungsweise des Magnetschutzes mit zwei axial um die Magnetkupplung angeordneten Ringen, wobei der externe Magnet und die Kupplungsmagnete geschlossene Feldlinien haben.

Fig. 1 zeigt den Aufbau der erfindungsgemässen Synchronkupplung bzw. Magnetkupplung, bei welcher ein primäres Element 2.1 mittels eines als Flügelrad ausgebildetes Messelement 2 angetrieben wird. Das Messelement 2 wird von einem eine Messkammer 1 durchströmenden Medium 1.1 angetrieben. Ein Zählwerk 5 ist durch eine aus einem nichtmagnetischen Material gefertigte Trennwand 3 von der Messkammer 1 abgetrennt. Das vom zu messenden Medium 1.1 umspülte primäre Element 2.1 weist einen vierpolig magnetisierten Ringmagnet 6 auf, welcher parallel und symmetrisch zur Drehachse magnetisiert ist und welcher beispielsweise vier je 90° zueinander gedrehte Pole aufweist, wobei abwechslungsweise Nordpole und Südpole vorgesehen sind. Fig. 1a zeigt die Pole des Ringmagneten 6. Die Rotation wird vom primären Element 2.1 berührungslos mittels Magnetkraft auf ein sekundäres Element 4 übertragen, wobei die Magnetkraft vom Ringmagnet 6 des primären Elementes 2.1 und von einem zweipoligen Magnet 7 des sekundären Elementes 4 erzeugt wird. Der sektorförmig magnetisierte Magnet 6 kann axial durchmagnetisiert oder sektorförmig auf der dem sekundären Element 4 zugewandten Fläche magnetisiert sein. Die Magnete 7 können zylindrisch oder kubisch sein. Die Synchronisation bei rotierendem Element 2.1 mit dem sekundären Element 4 ist gegeben, wenn die Pole des vierpoligen Magneten 6 diejenigen der zwei Magnete 7 anziehen und sich somit gegenseitig nicht mehr verdrehen. Das angetriebene sekundäre Element 4 überträgt die Bewegung auf das Zählwerk 5 mittels Trieb 10.

Fig. 1a zeigt zwei Varianten der Magnetisierung für den Magneten 6. Eine erste Variante zeigt axial durchmagnetisierte Pole. Eine zweite Variante zeigt eine einseitige, dem sekundären Element 4 zugewandte Magnetisierung.

Fig. 2 zeigt einen Schnitt durch Fig. 1, wobei der Schnitt durch die gemeinsame Axe des Messelementes 2, des primären Elementes 2.1 und des sekundären Elementes 4 verläuft. Das sekundäre Element 4 kann sich zwischen einem oberen axialen Anschlag 8 und einem unteren axialen Anschlag 9 mit einem Axialspiel A frei bewegen. Um eine optimale Synchronisation zwischen primärem Element 2.1 und sekundärem Element 4 zu erreichen, müssen die Masse des sekundären Elements 4, die Magnetkraft der Magnete 6 und 7 und das Axialspiel A aufeinander abgestimmt sein.

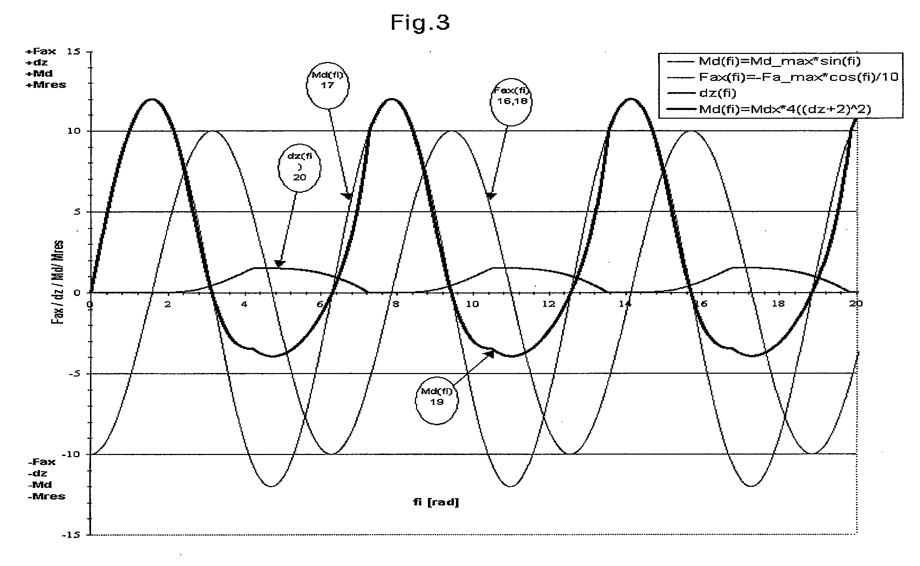

Fig. 3 zeigt einen Vergleich des vom primären Element 2.1 auf das sekundäre Element 4 übertragenen Drehmomentes bei gegenseitiger Verdrehung der beiden rotierenden Elemente 2.1,4 um einen Winkel fi bei einer Magnetkupplung mit und ohne axialem Spiel. Im Diagramm dargestellt sind die axiale Kraft Fax(fi) 16,18 als Funktion von fi, das übertragene Drehmoment Md(fi) ohne axiales Spiel 17 und mit axialem Spiel 19 sowie die axiale Verschiebung bei vorhandenem Axialspiel der Kupplung in Abhängigkeit der Polverdrehung fi dargestellt. Ohne Axialspiel zeigt die axiale Kraft 17 und das übertragene Drehmoment 18 über eine Polverdrehung fi einen sinusförmigen Verlauf. Durch Integration der Drehmomentkurve Md über eine Polverdrehung fi erhält man das resultierende Moment, welches ohne axiale Verschiebung Null wird. Im Falle einer axialen Verschiebung 20 ergibt sich durch die Reduzierung der Magnetkraft, welche bei der Abstossung der Magnete auftritt, einen nicht mehr sinusförmigen Verlauf für das übertragene Drehmoment 19. Das daraus entstehende resultierende Drehmoment wird grösser Null.

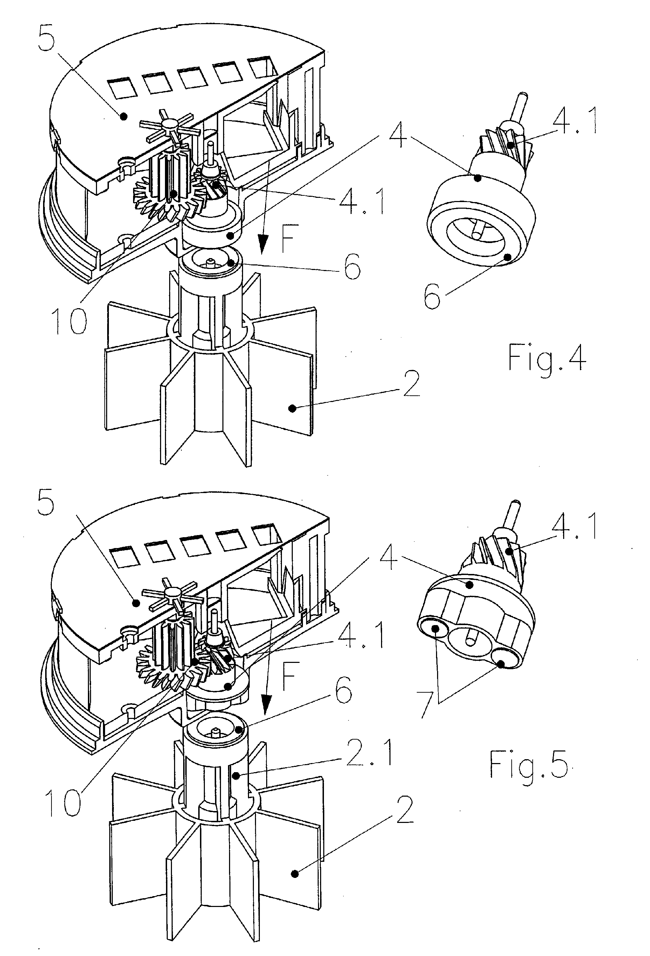

Fig. 4 zeigt eine zweite Gestaltungsvariante bei der das sekundäre Element 4 einen Ringmagnet 6 und eine Schrägverzahnung 4.1 aufweist. Bei einer Beschleunigung des sekundären Elementes 4 entsteht durch die Schrägverzahnung 4.1 eine axiale Kraft F. Der Schrägungswinkel der Verzahnung 4.1 wird dabei so gewählt, dass die axiale Kraft F bei einer Beschleunigung in Richtung des primären Elementes 2.1 zeigt. Weiter muss immer ein axiales Spiel zwischen oberem Anschlag 8 und unterem Anschlag 9 der Fig. 2. vorhanden sein.

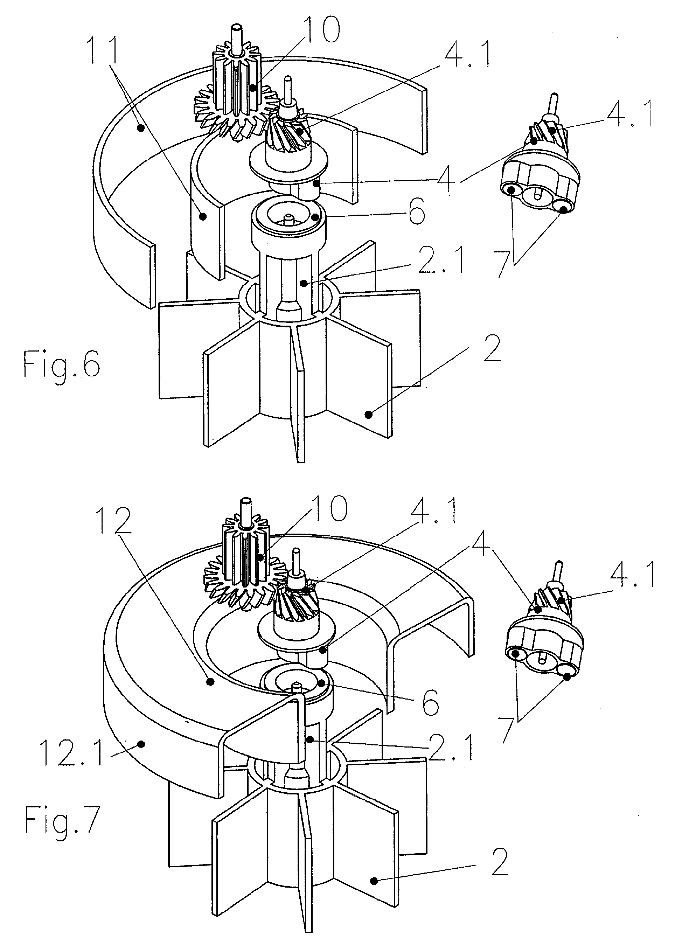

Fig 5. zeigt eine Kombination der ersten und der zweiten Gestaltungsvariante. Das sekundäre Element 4 weist eine Schrägverzahnung 4.1 und zylindrische Magnete 7 auf.

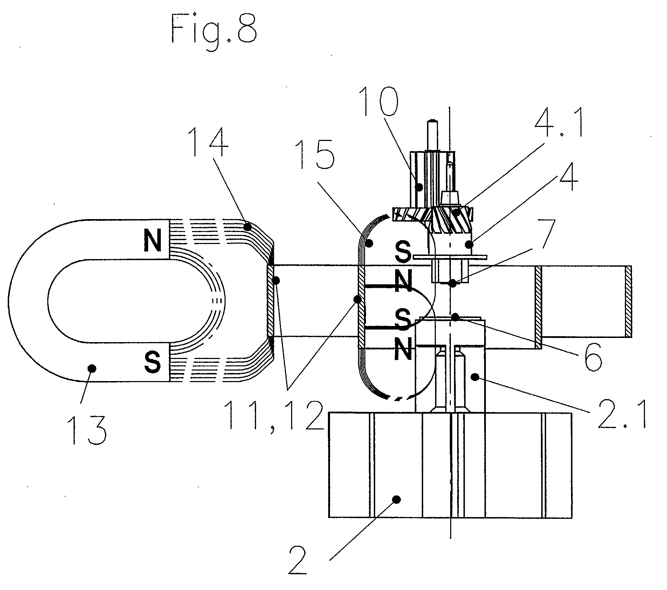

Fig. 6 und Fig. 7 zeigen Anordnungen einer Abschirmung gegenüber externen Magneten. Fig. 6 zeigt eine Variante mit zwei aus ferromagnetischem Material gefertigten Ringen 11, welche die Magnete 6,7 umgeben. Gemäss Fig. 7 sind die Ringe 11 aus ferromagnetischen Material durch einen scheibenförmigen Abschnitt 12 miteinander verbunden, wobei eine mit der Variante der Fig. 6 vergleichbare Abschirmwirkung entsteht. Die Handhabung der einstückigen Abschirmung 12.1 bei der Montage wird jedoch erleichtert.

Fig. 8 zeigt eine schematische Darstellung der Feldlinien 14,15, die durch einen externen Magneten 13 und die Magnete 6,7 der Magnetkupplung entstehen. Durch die ferromagnetischen Ringe 11 kann erreicht werden, dass sich die Feldlinien 14,15 aller Magnete 6,7,13 geschlossen sind und sich gegenseitig nicht beeinflussen.

## Patentansprüche

1. Messgerät für ein strömendes Medium bestehend aus einer vom Medium durchströmten Messkammer, in der ein vom Medium in Drehbewegung versetztes mit einem primären Element in Verbindung stehendes Messelement angeordnet ist, wobei die Drehbewegung des primären Elementes berührungslos auf ein sekundäres Element übertragbar ist, das mit einem Zählwerk in Verbindung steht,
**dadurch gekennzeichnet,**
**dass** das primäre Element (2.1) einen Magnet (6) mit auf der dem sekundären Element (4) zugewandten Seite mindestens zwei Nordpolen und mit mindestens zwei Südpolen aufweist und dass das sekundäre Element (4) einen Magnet (6,7) mit auf der dem primären Element (2.1) zugewandten Seite mindestens zwei gleiche Pole aufweist, wobei das primäre Element (2.1) und das sekundäre Element (4) zusammen eine Magnetkupplung bilden, die die Bewegung des Messelementes (2) auf das Zählwerk (5) überträgt.

2. Messgerät nach Anspruch 2,
**dadurch gekennzeichnet,**
**dass** das primäre Element (2.1) einen vierpoligen Ringmagnet (6) aufweist, welcher parallel und symmetrisch zur Drehachse magnetisiert ist und welcher vier je 90° zueinander gedrehte Pole aufweist, wobei abwechslungsweise Nordpole und Südpole vorgesehen sind.

3. Messgerät nach den Ansprüchen 1 oder 2,
**dadurch gekennzeichnet,**
**dass** das sekundäre Element (4) einen zweipoligen Magnet (7) aufweist, der parallel und symmetrisch zur Drehachse magnetisiert ist, wobei auf der dem primären Element (2.1) zugewandten Seite gleiche Magnetpole vorgesehen sind.

4. Messgerät nach den Ansprüchen 1 oder 2,
**dadurch gekennzeichnet,**
**dass** das sekundäre Element (4) einen vierpoligen Ringmagnet (6) aufweist, welcher parallel und symmetrisch zur Drehachse magnetisiert ist und welcher vier je 90° zueinander gedrehte Pole aufweist, wobei abwechslungsweise Nordpole und Südpole vorgesehen sind.

5. Messgerät nach einem der vorhergehenden Ansprüche,
**dadurch gekennzeichnet,**
**dass** das sekundäre Element eine Schrägverzahnung (4.1) aufweist, das die Drehbewegung auf einen Trieb (10) des Zählwerkes (5) überträgt, wobei bei einer Beschleunigung eine axiale Kraft (F) in Richtung des primären Elementes (2.1) auf das sekundäre Element (4) einwirkt.

6. Messgerät nach einem der vorhergehenden Ansprüche,
**dadurch gekennzeichnet,**
**dass** zur Abschirmung der durch das primäre Element (2.1) und das sekundäre Element (4) gebildete Magnetkupplung konzentrische Ringe (11) vorgesehen sind.

7. Messgerät nach Anspruch 6,
**dadurch gekennzeichnet,**
**dass** die Ringe (11) mittels scheibenförmigem Abschnitt (12) verbunden sind, wobei Ringe (11) und Abschnitt (12) eine einstückige Abschirmung (12.1) bilden.
